# EUROPÄISCHE PATENTSCHRIFT

(11) **EP 3 384 171 B1**
(45) Veröffentlichungstag und Bekanntmachung des Hinweises auf die Patenterteilung: **09.10.2019**
(21) Anmeldenummer: 16753931.1
(22) Anmeldetag: 22.08.2016
(51) Int. Cl.: F16D 3/68, F16D 3/78

(54) **KLAUENKUPPLUNG**
JAW CLUTCH
ACCOUPLEMENT À GRIFFES

(30) Priorität: 30.11.2015 DE 102015223792
(43) Veröffentlichungstag der Anmeldung: 10.10.2018
(73) Patentinhaber: ContiTech Vibration Control GmbH, 30165 Hannover (DE)
(72) Erfinder: WEISS, Rolf, 29553 Bienenbüttel (DE)
(74) Vertreter: Kilsch, Armin Ralph
(86) Internationale Anmeldenummer: PCT/EP2016/069761
(87) Internationale Veröffentlichungsnummer: WO 2017/092889

(56) Entgegenhaltungen:
- WO-A1-2010/060625
- CA-A1- 2 216 271
- DE-A1- 2 418 057
- US-A- 2 891 395
- US-A- 4 172 369

## Beschreibung

Die Erfindung betrifft eine Klauenkupplung mit einem ersten und einem zweiten Kupplungsflansch und mindestens einem elastischen Verbindungselement, wobei die Kupplungsflansche je mindestens zwei Klauen aufweisen, und dass Verbindungselement Aussparungen aufweist, die Kupplungsflansche sich gegenüberliegen und die Klauen der Kupplungsflansche derart in die Aussparungen des Verbindungselementes eingreifen, das jeweils abwechselnd eine Klaue des ersten Kupplungsflansches und eine Klaue des zweiten Kupplungsflansches in Umfangsrichtung aufeinanderfolgend in den Aussparungen des Verbindungselementes zu liegen kommen, wobei die Kupplungsflansche jeweils eine am Außenumfang der Kupplungsflansche angeordnete umlaufende und in Umfangsrichtung ringförmig geschlossene Verstärkung aufweisen, mit der die Klauen stoffschlüssig verbunden sein können.

Elastische Klauenkupplungen sind seit langem bekannt, um beispielsweise Drehmomentstöße oder Ungleichmäßigkeiten der Drehbewegung von Wellen und Achsen auszugleichen. Dabei können die Klauen der Kupplungsflansche eine Vielzahl verschiedener Formen annehmen.

Die DE 2234437 A1, DE 2253041 A1 und die DE 4307365 A1 zeigen derartige Klauenkupplungen in verschiedenen Ausführungsformen. Den genannten Klauenkupplungen ist gemeinsam, dass die Kupplungsflansche aus Metall ausgebildet sind. Zunehmend wird jedoch auch für die gattungsgemäßen Klauenkupplungen angestrebt, die Kupplungsflansche aus Kunststoff auszubilden. Da die zu übertragenden Drehmomente insbesondere bei impulsartiger Verstärkung sehr hoch werden können, besteht der Nachteil, dass Klauenkupplungen aus Kunststoff entweder besonders große Durchmesser aufweisen müssen oder im Betrieb das Risiko besteht, dass die Klauen der Kupplungsflansche abbrechen.

Die US 2,891,395 zeigt ebenfalls eine gattungsgemäße Klauenkupplung, bei der die Kupplungsflansche jeweils eine am Außenumfang der Kupplungsflansche angeordnete umlaufende und in Umfangsrichtung ringförmig geschlossene Verstärkung aufweisen.

Diese ringförmig geschlossene Verstärkung wirkt ähnlich wie Fassdauben auf die Klauen der Kupplungsflansche, sodass diese nicht nach außen wegbrechen können. Für die Verwendung von Kunststoff wäre es aber zur Verbesserung der Stabilität wünschenswert, die Klauen der jeweiligen Kupplungsflansche noch besonders zu verstärken.

Der Erfindung liegt die Aufgabe zugrunde, eine Klauenkupplung der eingangs geschilderten Art derart zu verbessern, dass auch bei Einsatz von Kunststoffen durch die Kupplungen hohe Drehmomente ohne Bruchgefahr bei möglichst kleiner Baugröße übertragbar sind.

Diese Aufgabe wird dadurch gelöst, dass die Verstärkungen in axialer Richtung jeweils ein geschwungenes Profil mit Profiltälern und Profilhöhen aufweisen, wobei die Profile axial derart angeordnet sind, dass die Profiltäler des ersten Kupplungsflansches mit den Profilhöhen des zweiten Kupplungsflansches und die Profilhöhen des ersten Kupplungsflansches mit den Profiltälern des zweiten Kupplungsflansches korrespondieren und zwischen den Profilen ein axialer Abstand besteht.

Die Profilhöhen sind dabei zweckmäßigerweise den jeweiligen Klauen zugeordnet, sodass hier eine besonders gute Stützwirkung besteht. Der axiale Abstand zwischen den Profilen erlaubt einen gewissen Versatz in Umfangsrichtung, ohne dass sich die Profile berühren. So ist eine elastische Abfederung des ersten gegen den zweiten Kupplungsflansch über das elastomere Verbindungselement ohne direkte Berührung der Kupplungsflansche möglich.

Anhand der Zeichnung wird nachstehend ein Beispiel der Erfindung näher erläutert. Es zeigt
Figur 1 eine Explosion Darstellung einer erfindungsgemäßen Klauenkupplung
Figur 2 eine perspektivische Darstellung eines Kupplungsflansches einer erfindungsgemäßen Klauenkupplung und
Figur 3 eine perspektivische Darstellung eines Kupplungsflansches der erfindungsgemäßen Klauenkupplung.

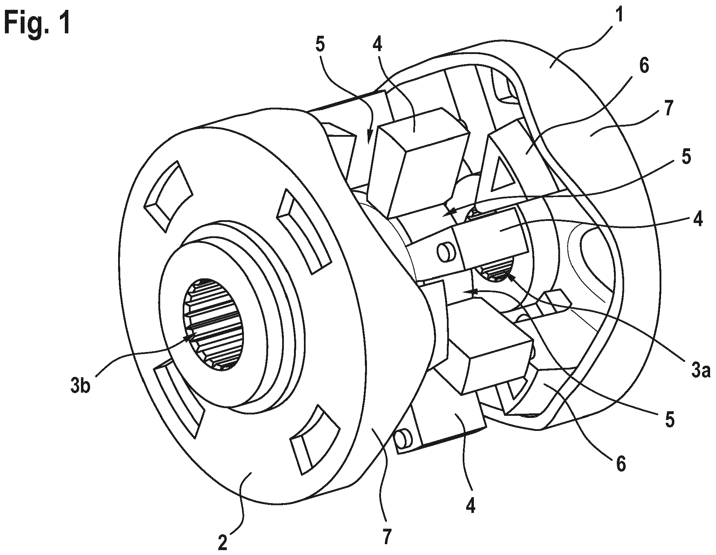

In der Figur 1 ist eine Übersicht über eine erfindungsgemäße Klauenkupplung in einer Explosionszeichnung gezeigt. Die Klauenkupplung weist einen ersten Kupplungsflansch 1 und einen zweiten Kupplungsflansch 2 auf, die jeweils aus einem Kunststoffmaterial ausgebildet sind und sich in axialer Richtung gegenüber liegen. Die Kupplungsflansche 1 und 2 weisen jeweils eine Bohrung 3a, 3b mit einer Verzahnung auf, durch die jeweils ein hier nicht gezeigter Wellenabschnitt steckbar ist.

Zwischen den Kupplungsflansche 1 und 2 ist ein elastisches Verbindungselement 4 angeordnet, welches in Umfangsrichtung mehrere Aussparungen 5 aufweist. Jeder Kupplungsflansch 1 und 2 weist vier Klauen 6 auf, von denen nur die Klauen 6 des Kupplungsflansches 1 sichtbar sind. Die Aussparungen 5 des elastischen Elementes 4 korrespondieren mit den Klauen 6, sodass die Klauen 6 im Zusammenbau in die Aussparungen 5 eingreifen. Die Übertragung von Drehmomenten von Kupplungsflansch 1 auf Kupplungsflansch 2 kann dann dadurch erfolgen, dass die Klauen 6 des Kupplungsflansches 1 über das elastische Element 4 auf die Klauen 6 des Kupplungsflansches 2 einwirken. Das elastische Element 4 sorgt für eine Dämpfung eventueller Drehmomentspitzen.

Außen um die Klauen 6 herum ist je Kupplungsflansch 1 und 2 jeweils eine ringförmige Verstärkung 7 angeordnet.

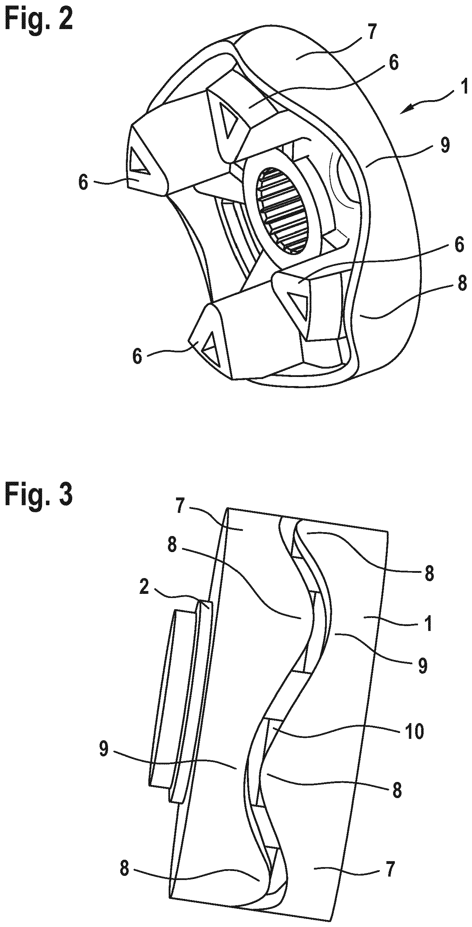

In der Figur 2 ist der Kupplungsflansch 1 in einer perspektivischen Darstellung gezeigt. Zur besseren Übersicht ist hier das elastische Element 4 und der Kupplungsflansch 2 nicht gezeigt. Die Klauen 6 sind mit der sie außen umgebenden Verstärkung 7 stoffschlüssig verbunden, die Verstärkung 7 ist ihrerseits mit dem Kupplungsflansch 1 stoffschlüssig verbunden, sodass der Kupplungsflansch ähnlich eines Napfes ausgebildet ist.

Die Verstärkung 7 weist in axialer Richtung ein Profil mit Profilhöhen 8 und Profiltälern 9 auf. Die Profilhöhen 8 sind jeweils den Klauen 6 zugeordnet. Durch die Anordnung der Profilhöhen 8 in Korrespondenz zu den Klauen 6 ergibt sich eine besonders gute Stützwirkung der Verstärkung 7.

In Figur 3 ist eine Außenansicht der erfindungsgemäßen Klauenkupplung im Zusammenbau gezeigt. Die Profilhöhen 8 der Verstärkung 7 des Kupplungsflansches 1 korrespondieren mit den Profiltälern 9 des Kupplungsflansches 2 und umgekehrt.

Zwischen den beiden gegenüberliegenden Verstärkungen 7 ist ein Spalt 10 angeordnet, der so bemessen ist, dass eine Berührung der beiden Verstärkungen auch bei maximal zu erwartender Verdrehung des Kupplungsflansches 1 gegen den Kupplungsflansch 2 ausgeschlossen ist.

### Bezugszeichenliste

### (Teil der Beschreibung)

- 1: Erster Kupplungsflansch
- 2: Zweiter Kupplungsflansch
- 3a, 3b: Bohrungen der Kupplungsflansche 1, 2
- 4: elastisches Verbindungselement
- 5: Aussparungen im elastischen Element 4
- 6: Klauen der Kupplungsflansche 1, 2
- 7: ringförmige Verstärkungen
- 8: Profilhöhen der ringförmigen Verstärkungen 7
- 9: Profiltäler der ringförmigen Verstärkungen 7
- 10: Spalt zwischen den Verstärkungen 7

## Patentansprüche

1. Klauenkupplung mit einem ersten und einem zweiten Kupplungsflansch (1, 2) und mindestens einem elastischen Verbindungselement (4), wobei die Kupplungsflansche (1, 2) je mindestens zwei Klauen (6) aufweisen, und das Verbindungselement (4) Aussparungen (5) aufweist, die Kupplungsflansche (1,2) sich gegenüberliegen und die Klauen (6) der Kupplungsflansche (1, 2) derart in die Aussparungen (5) des Verbindungselementes (4) eingreifen, das jeweils abwechselnd eine Klaue (6) des ersten Kupplungsflansches (1) und eine Klaue (6) des zweiten Kupplungsflansches (2) in Umfangsrichtung aufeinanderfolgend in den Aussparungen (5) des Verbindungselementes (4) zu liegen kommen, wobei die Kupplungsflansche (1, 2) jeweils eine am Außenumfang der Kupplungsflansche (1, 2) angeordnete umlaufende und in Umfangsrichtung ringförmig geschlossene Verstärkung (7) aufweisen, mit der die Klauen (6) stoffschlüssig verbunden sein können,
**dadurch gekennzeichnet, dass** die Verstärkungen (7) in axialer Richtung jeweils ein geschwungenes Profil mit Profiltälern (9) und Profilhöhen (8) aufweisen, wobei die Profile axial derart angeordnet sind, dass die Profiltäler (9) des ersten Kupplungsflansches (1) mit den Profilhöhen (8) des zweiten Kupplungsflansches (2) und die Profilhöhen (8) des ersten Kupplungsflansches (1) mit den Profiltälern (9) des zweiten Kupplungsflansches (2) korrespondieren und zwischen den Profilen ein axialer Abstand (10) besteht.

## Claims

1. Claw coupling having a first and a second coupling flange (1, 2) and at least one elastic connecting element (4), the coupling flanges (1, 2) having in each case at least two claws (6), and the connecting element (4) having cut-outs (5), the coupling flanges (1, 2) lying opposite one another, and the claws (6) of the coupling flanges (1, 2) engaging into the cut-outs (5) of the connecting element (4) in such a way that a claw (6) of the first coupling flange (1) and a claw (6) of the second coupling flange (2) in each case in an alternating manner come to lie in the cut-outs (5) of the connecting element (4) so as to follow one another in the circumferential direction, the coupling flanges (1, 2) in each case having a circumferential reinforcement (7) which is arranged on the outer circumference of the coupling flanges (1, 2), is closed in an annular manner in the circumferential direction, and to which the claws (6) can be connected in an integrally joined manner, **characterized in that** the reinforcements (7) in each case have a curved profile in the axial direction with profile troughs (9) and profile peaks (8), the profiles being arranged axially in such a way that the profile troughs (9) of the first coupling flange (1) correspond with the profile peaks (8) of the second coupling flange (2) and the profile peaks (8) of the first coupling flange (1) correspond with the profile troughs (9) of the second coupling flange (2), and there is an axial spacing (10) between the profiles.

## Revendications

1. Accouplement à griffes comprenant une première et une deuxième bride d'accouplement (1, 2) et au moins un élément de connexion élastique (4), les brides d'accouplement (1, 2) présentant chacune au moins deux griffes (6) et l'élément de connexion (4) présentant des évidements (5), les brides d'accouplement (1, 2) étant opposées l'une à l'autre et les griffes (6) des brides d'accouplement (1, 2) s'engageant dans les évidements (5) de l'élément de connexion (4) de telle sorte qu'une griffe (6) de la première bride d'accouplement (1) et une griffe (6) de la deuxième bride d'accouplement (2) viennent se placer à chaque fois en alternance l'une après l'autre dans la direction périphérique dans les évidements (5) de l'élément de connexion (4), les brides d'accouplement (1, 2) présentant chacune un renforcement (7) fermé de manière annulaire dans la direction périphérique et disposé circonférentiellement sur la périphérie extérieure des brides d'accouplement (1, 2), avec lequel les griffes (6) peuvent être connectées par liaison de matière,
**caractérisé en ce que** les renforcements (7) présentent, dans la direction axiale, à chaque fois un profil arrondi avec des creux de profil (9) et des crêtes de profil (8), les profils étant disposés axialement de telle sorte que les creux de profil (9) de la première bride d'accouplement (1) correspondent aux crêtes de profil (8) de la deuxième bride d'accouplement (2) et que les crêtes de profil (8) de la première bride d'accouplement (1) correspondent aux creux de profil (9) de la deuxième bride d'accouplement (2) et qu'un espacement axial (10) subsiste entre les profils.
